# NEUE EUROPÄISCHE PATENTSCHRIFT

(11) **EP 0 228 111 B2**
(45) Veröffentlichungstag und Bekanntmachung des Hinweises auf die Entscheidung über den Einspruch: **15.06.1994**
(45) Hinweis auf die Patenterteilung: 06.09.1989
(21) Anmeldenummer: 86202110.2
(22) Anmeldetag: 27.11.1986
(51) Int. Cl.: B01D 53/34

(54) **Verfahren zur Entfernung von Schadstoffen aus Abgasen**
Process for the removal of noxious matter from waste gases
Procédé pour l'élimination des substances nocives dans des gaz d'échappement

(30) Priorität: 18.12.1985 DE 3544764
(43) Veröffentlichungstag der Anmeldung: 08.07.1987
(73) Patentinhaber: METALLGESELLSCHAFT AG, 60015 Frankfurt (DE)
(72) Erfinder: Arras, Karlheinz, D-6000 Frankfurt am Main 1 (DE); Kühle, Karlheinz, Dr., D-6365 Rosbach 1 (DE); Graf, Rolf, Dr., D-6382 Friedrichsdorf (DE); Liebig, Eberhard, D-6200 Wiesbaden (DE)
(74) Vertreter: Rieger, Harald, Dr.

(56) Entgegenhaltungen:
- EP-A- 0 105 547
- EP-A- 0 137 599
- DE-A- 1 669 315
- DE-A- 3 326 935
- DE-A- 3 415 210
- GB-A- 2 118 924
- Chemie Technik, Heft 9 (1967), S. 553-557
- Ullmanns Encyklopädie der Technischen Chemie, Band 2 (1972), S. 15-17
- Circulating Fluidized Bed Technology, Proceedings of the First International Conference on Circulating Fluidized Beds, Halifax, Nova Scotia, Canada, 18-20 November 1985, Pergamon Press, Toronto, S. 317-327

## Beschreibung

Die Erfindung bezieht sich auf ein Verfahren zur trockenen Entfernung von Schadstoffen aus den Abgasen von Zementherstellungsprozessen. Um den geltenden Umweltschutzbestimmungen zu genügen, werden zunehmend auch Anlagen für die Zementherstellungsindustrie mit Einrichtungen zur Schadgasabscheidung ausgerüstet.

Bei den bekannten Naß-Reinigungsverfahren werden die Abgase üblicherweise nach einer Entstaubung mit einer im Kreislauf geführten Waschflüssigkeit behandelt und dabei so weit abgekühlt, daß eine Wiederaufheizung auf ca. 20°C über dem Taupunkt erforderlich wird, um Korrosionsschäden zu vermeiden. Die anfallende Menge an Reaktionsprodukten ist in der Regel auch zu groß, als daß sie insgesamt in den Herstellungsprozeß zurückgeführt werden könnte. Naß-Reinigungsverfahren sind deswegen meist mit hohen Anlage- und Betriebskosten verbunden, die oft einerzügigen Realisierung der Abgasreinigung entgegenstehen.

Bei der Herstellung von Zement hat man auch schon versucht, die Abgase bei 300 bis 850°C trocken zu reinigen. Dabei hat sich jedoch herausgestellt, daß die Abgase bei Temperaturen oberhalb von 500°C häufig weniger als 100 mg/Nm³ von dem hier im Vordergrund stehenden Schadstoff S0₂ enthalten, weil der größte Teil des mit dem Brennstoff in den Zementherstellungsprozeß eingebrachten Schwefels in diesem Temperaturbereich vom Rohmehl sorbiert und in den Klinker eingebunden wird.

Beim Zementherstellungsprozeß wird Schwefel aber auch durch das Rohmehl in den Brennprozeß eingeschleppt. Dieser Schwefel stammt zum Teil aus organischen bzw. sulfidischen Schwefelverbindungen, die schon bei niedrigen Temperaturen zerfallen und zur Freisetzung von S0₂ während der Vorwärmung des Rohmehls führen, wobei S0₂-Gehalte bis zu 6000 mg/Nm³ auftreten können. Da bei den im Zementprozeß üblichen Abgastemperaturen praktisch keine Sorption des S0₂ durch das Rohmaterial erfolgt, muß auch für Zementherstellungsanlagen eine Abgasentschwefelungseinrichtung vorgesehen werden, obwohl der mit dem Brennstoff eingebrachte Schwefel verfahrensbedingt nurzum geringen Teil im Abgas enthalten ist.

Eine Trockenreinigung bei Temperaturen von 200 bis 400°C ist unabhängig vom eingesetzten Sorbent und unabhängig vom Verhältnis Sorbent zur Schadstoffmenge aber nicht besonders wirksam. Im allgemeinen können nur weniger als 60 % der Schadstoffe aus dem Abgas entfernt werden, wenn man nicht auf teure und wegen des meist hohen Staubanfalls nur bedingt betriebssichere Reinigungsverfahren mit Katalysatoren übergehen will.

Es besteht somit die Aufgabe, für die Entfernung von Schadstoffen aus den Abgasen von Brennprozessen der Zementherstellungsindustrie ein Verfahren vorzuschlagen, das allgemein anwendbar und wirtschaftlicher ist, als die bekannten verfahren.

Diese Aufgabe wird erfindungsgemäß dadurch gelöst, daß die Abgase in einem aus Wirbelschichtreaktor (1), Feststoffabscheider (2) und Rückführleitung (3) gebildeten Feststoff-Zirkulationssystem mit einem Sorbent in Form von Feststoffpartikeln bei 50 bis 100°C in Kontakt gebracht werden, wobei als Sorbent eine Mischung aus Rohmehl und Kalkhydrat verwendet wird, der Anteil des Kalkhydrats etwa 50 % des stöchiometrisch erforderlichen Calciumbedarfs deckt, die Temperatur im Wirbelschichtreaktor (1) durch das Einsprühen von Wasser geregelt wird und das beladene Sorbent in den Zementherstellungsprozeß rückgeführt wird.

Mit dem erfindungsgemäßen Verfahren kann nicht nur die bei anderen Trocken-Reinigungsverfahren im unteren Temperaturbereich häufig zu kurze Kontaktzeit beliebig erhöht werden, es wird auch ein Produkt geschaffen, das keine besondere Weiterverarbeitung oder Deponierung erfordert, wodurch die Wirtschaftlichkeit herkömmlicher Verfahren oft sehr belastet ist.

Die Abgase haben vor Eintritt in das Feststoff-Zirkulationssystem zweckmäßigerweise eine Temperatur von 50 bis 100°C. Da in Anlagen zum Brennen von Steinen und Erden üblicherweise ein End-Staubabscheider vorhanden ist, kann dieser als Feststoffabscheider des Feststoff-Zirkulationssystems verwendet werden.

Der Hauptvorteil des erfindungsgemäßen Verfahrens besteht darin, daß als Sorbent zur Herstellung von Zement eingesetzte Materialien wie Rohmehl und Kalkhydrat verwendet und anschließend einem Zementherstellungsprozeß wieder zugeführt werden.

Schließlich ist noch vorgesehen, daß die Temperatur im Wirbelschichtreaktor durch das Einsprühen von Wasser auf einen optimalen Wert und die Sorptionsmittelzugabe in Abhängigkeit vom Schadstoffgehalt im Reingas geregelt wird.

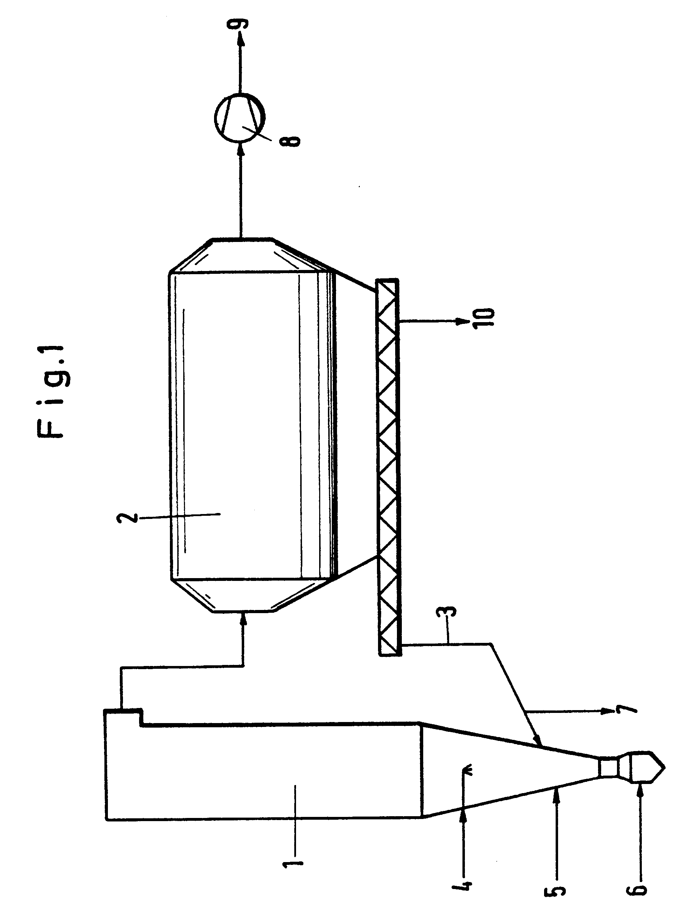

Weitere Einzelheiten werden am Beispiel der Entschwefelung von Abgasen eines Zementherstellungsprozesses und anhand des in Figur 1 vereinfacht dargestellten Verfahrensfließbildes erläutert.

Das aus dem Wirbelschichtreaktor 1, dem Feststoffabscheider 2 und der Rückführleitung 3 bestehende Feststoff-Zirkulationssystem wird über die Leitung 4 mit Sprühwasser, über die Leitung 5 mit Sorptionsmitteln und über die Leitung 6 mit dem zu entschwefelnden Abgas beschickt. Das weitgehend entschwefelte Abgas verläßt den Wirbelschichtreaktor 1 oben, wird im Feststoffabscheider 2 vom Staub befreit und gelangt über das Gebläse 8 und die Leitung 9 zum Kamin. Unter dem Feststoffabcheider 2 ist eine Fördereinrichtung angeordnet, mit der der abgeschiedene Staub zur Rückführleitung 3 transportiert und schließlich wieder in den Wirbelschichtreaktor 1 aufgegeben wird. Eine Teilmenge der zirkulierenden Feststoffpartikel wird über die Leitung 7 aus dem Feststoff-Zirkulationssystem ausgeschleust und an geeigneter Stelle dem Zementherstellungsprozeß zugeführt.

Einzelne im Feststoff enthaltene Komponenten, z.B. Schwermetalle, können nach selektiverAbscheidung getrennt von den übrigen Stoffen über Leitung 10 ausgetragen werden.

Die Abgase fallen, je nachdem ob und welche Wärmerückgewinnungseinrichtungen (Abhitzekessel, Warmwasserbereitung, Mühle) vorgesehen sind, mit einer Temperaturvon 100 bis 450°C an. Ihr Staubgehalt beträgt bis zu 100 g/Nm³, wenn sie nicht über eine Mühle geleitet werden. Im letztgenannten Fall kann die Staubbeladung bis zu 1000 g/Nm³ betragen und es kann eine Vorentstaubung mittels Elektrofilter oder mechanischem Abscheider sinnvoll sein, um den Feststoffumlauf im Feststoff-Zirkulationssystem auf die für die Entschwefelung optimale Menge begrenzen zu können. Ggfs. kann in solchen Fällen auf die gesonderte Zugabe von Sorptionsmitteln ganz oder teilweise verzichtet werden. Der Staubgehalt der Abgase wird im Feststoffabscheider auf weniger als 50 mg/Nm³ reduziert.

Der S0₂-Gehalt im Abgas beträgt je nach Rohmaterialzusammensetzung bis zu 6000 mg/Nm³. Er kann mit dem erfindungsgemäßen Verfahren bis auf Werte kleiner 50 mg/Nm³ im Reingas gesenkt werden. Die nach den gesetzlichen Vorschriften zulässigen Mengen an S0₂ liegen derzeit in Deutschland bei 400 mg/Nm³, in der Schweiz bei 500 mg/Nm³.

Ein weitererVorteil des Verfahrens besteht darin, daß zur Verbesserung der Wirtschaftlichkeit in den Brennprozessen auch solche Brennstoffe eingesetzt werden können, die Schwermetalle, einschließlich Schadstoffe der Klasse 1, wie Cadmium, Thallium, Quecksilber und dergleichen enthalten. Diese Schadstoffe werden im Wirbelschichtreaktor überwiegend an die besonders feinkörnige Feststoffpartikel gebunden und können in einem klassierend arbeitenden Feststoffabscheider, z.B. einem mehrfeldrigen Elektrofilter, nahezu vollständig getrennt von den übrigen Schadstoffen abgeschieden und unabhängig von den in einen Zementherstellungsprozeß zurückgeführten Reaktionsprodukten ausgeschleust werden.

Die auf diese Weise ausgeschleusten Feststoffpartikel weisen einerseits eine hohe Schadstoffkonzentration auf, stellen aber andererseits nur eine geringe Menge der insgesamt anfallenden Reaktionsprodukte dar. Sie werden an geeigneter Stelle in den Zement-Herstellungsprozeß rückgeführt, da sie selbst stabil und wasserunlöslich abgebunden sind. Bei der Zementherstellung bietet es sich an, sie bei der Klinker- bzw. Zementmahlung zuzumischen. Mit dem erfindungsgemäßen Verfahren können 90 % der genannten Schadstoffe aus den Abgasen abgeschieden und umweltfreundlich entsorgt werden.

Das erfindungsgemäße Verfahren wurde versuchsweise bei einer Zementherstellungsanlage angewendet. Der Sulfid-Gehalt des Rohmaterials betrug 0,3 bis 0,4 %, bezogen auf das Gewicht des Rohmaterials, wobei S0₂-Gehalte in dem untersuchten Abgas-Teilstrom bis zu 3600 mg/Nm³ gemessen wurden, wenn das erfindungsgemäße Verfahren nicht benutzt wurde. Bei Anwendung des Verfahrens konnte der S0₂-Gehalt auf Werte deutlich unter 400 mg/Nm³ gesenkt werden. Als Sorptionsmittel wurde hierbei Rohmehl benutzt, dem Kalkhydrat in einer solchen Menge zugemischt war, daß hiermit etwa 50 % des stöchiometrisch erforderlichen Calciumbedarfs gedeckt wurde.

## Patentansprüche

1. Verfahren zur trockenen Entfernung von Schadstoffen aus den Abgasen von Zementherstellungsprozessen, dadurch gekennzeichnet, daß die Abgase in einem aus Wirbelschichtreaktor (1), Feststoffabscheider (2) und Rückführleitung (3) gebildeten Feststoff-Zirkulationssystem mit einem Sorbent in Form von Feststoffpartikeln bei 50 bis 100°C in Kontakt gebracht werden, wobei als Sorbent eine Mischung aus Rohmehl und Kalkhydrat verwendet wird, der Anteil des Kalkhydrats etwa 50 % des stöchiometrisch erforderlichen Calciumbedarfs deckt, die Temperatur im Wirbelschichtreaktor (1) durch das Einsprühen von Wasser geregelt wird und das beladene Sorbent in den Zementherstellungsprozeß rückgeführt wird.

2. Verfahren nach Anspruch 1, dadurch gekennzeichnet, daß die Abgase vor Eintritt in das Feststoff-Zirkulationssystem auf 50 bis 100°C abgekühlt werden.

3. Verfahren nach einem der Ansprüche 1 oder 2, dadurch gekennzeichnet, daß als Feststoffabscheider (2) der in einer Brennanlage üblicherweise vorhandene End-Staubabscheider verwendet wird.

4. Verfahren nach den Ansprüchen 1 bis 3, dadurch gekennzeichnet, daß die Sorptionsmittelzugabe in Abhängigkeit vom Schadstoffgehalt im Reingas geregelt wird.

5. Verfahren nach den Ansprüchen 1 bis 4, dadurch gekennzeichnet, daß Brennstoffe eingesetzt werden, die Schwermetalle enthalten, wobei das durch Bindung dieser Schadstoffe an feinkörnigen Feststoffpartikeln des Sorbents im Wirbelschichtreaktor (1) entstandene Produkt in einem klassierend arbeitenden Feststoffabscheider (2) nahezu vollständig getrennt von den übrigen Schadstoffen abgeschieden und in den Zement- herstellungsprozeß rückgeführt und bei der Klinker- bzw. Zementmahlung zugemischt wird.

## Claims

1. A process for the dry removal of pollutants from the exhaust gases in cement production processes, characterised in that the exhaust gases are brought into contact with a sorbent in the form of solids particles at 50 to 100°C in a solids circulation system formed by a fluidised bed reactor (1), a solids separator (2) and a recycling line (3), wherein a mixture of raw meal and slaked lime is used as a sorbent, the proportion of slaked lime covers approximately 50% of the stoichiometrically required calcium requirement, the temperature in the fluidised bed reactor (1) is controlled by the spraying-in of water and the laden sorbent is recycled into the cement production process.

2. A process according to Claim 1, characterised in that the exhaust gases are cooled to 50 to 100°C before entering the solids circulation system.

3. A process according to one of Claims 1 or 2, characterised in that the final dust collector which is usually provided in a burning plant is used as a solids separator (2).

4. A process according to Claims 1 to 3, characterised in that the addition of sorbent is controlled dependent on the pollutant content of the pure gas.

5. A process according to Claims 1 to 4, characterised in that fuels are used which contain heavy metals wherein the product formed by the binding of these pollutants to fine-grained solids particles of the sorbent in the fluidised bed reactor (1) is removed almost completely separately and discharged independently from the other pollutants in a classifying solids separator (2) and is recycled into the cement production process and is added during the grinding of clinker or cement.

## Revendications

1. Procédé pour éliminer par voie sèche des substances polluantes d'effluents gazeux de processus de préparation du ciment, caractérisé en ce qu'il consiste à mettre les effluents en contact avec un agent adsorbant sous forme de particules solides entre 50 et 100°C, dans un système de circulation de matières solides formées d'un réacteur à lit fluidisé (1), d'un séparateur de matières solides (2) et d'un conduit de recyclage (3), en utilisant comme agent absorbant un mélange de farine crue et de chaux éteinte, la proportion de chaux éteinte couvrant environ 50% des besoins stoechiométriques en calcium, à régler la température dans le réacteur à lit fluidisé (1) par projection d'eau et à retourner l'agent adsorbant chargé au processus de fabrication du ciment.

2. Procédé suivant la revendication 1, caractérisé en ce qu'il consiste à refroidir les effluents gazeux entre 50 et 100°C avant l'entrée dans le système de circulation des matières solides.

3. Procédé suivant l'une des revendications 1 ou 2, caractérisé en ce qu'il consiste à utiliser comme séparateur de matières solides (2) le séparateur de poussière terminal prévu habituellement dans une installation de combustion.

4. Procédé suivant l'une des revendications 1 à 3, caractérisé en ce qu'il consiste à régler l'addition d'agent adsorbant en fonction de la teneur en substances polluantes du gaz épuré.

5. Procédé suivant l'une des revendications 1 à 4, caractérisé en ce qu'il consiste à utiliser des matières combustibles qui contiennent des métaux lourds, le produit formé par fixation de ces substances polluantes sur des particules de matières solides à grain fin de l'agent adsorbant dans le réacteur à lit fluidisé (1) étant séparé presque complètement dans un séparateur (2) de matières solides fonctionnant par criblage des autres substances polluantes et étant recyclé au processus de préparation du ciment et additionné lors du broyage du clinker ou du ciment.
